# EUROPEAN PATENT SPECIFICATION

(11) **EP 2 805 843 B1**
(45) Date of publication and mention of the grant of the patent: **14.09.2016**
(21) Application number: 13305658.0
(22) Date of filing: 22.05.2013
(51) Int. Cl.: B60K 11/04

(54) **Vehicle active cooling system**
Aktives Fahrzeugkühlsystem
Système de refroidissement actif de véhicule

(43) Date of publication of application: 26.11.2014
(73) Proprietor: Faurecia Bloc Avant, 92000 Nanterre (FR)
(72) Inventor: Gillard, Laurent, Southfield, MI 48076 (US)
(74) Representative: Lavoix

(56) References cited:
- DE-A1- 2 035 463
- DE-A1-102008 004 446
- DE-U1- 20 016 748
- FR-A1- 2 478 551

## Description

The present invention relates to an assembly located in the front body of an automotive vehicle assembly comprising a module and an exhaust opening, wherein the module extends opposite an air inlet of the vehicle and comprises at least one opening.

The invention is for example applied to conventional automotive vehicle where the engine is in the front body of the vehicle and is cooled by a coolant cooling module. The cooling module comprises a radiator which enables to cool the coolant with the air drawn through grilles located in the front end surface of the front body, next to the bumper. The air is either drawn in by a radiator fan, or forced in by the movement of the car through the air.

Air grille shutters are known, they comprise a grille with blades which are each moveable in rotation. The system automatically controls front-end grille blades so as to close the air inlet when the engine does not need to be cooled, and to open the air inlet when the engine is too hot. Such a system enables to reduce drag so as to make fuel economies at high speeds, when the blades are in their closed position.

However, such an air grille shutter requires, in particular, a motor to drive the blades. So this system adds weight on the vehicle at a location which penalizes the Noise, vibration, and harshness (NVH) performances. Indeed, mass overhanging from the front wheel axis is known to have a negative impact on the level of NVH throughout the vehicle.

Furthermore, each blade is mounted in rotation independently, and it is required that all the blades move simultaneously, which complicates the driving of the blades and the mounting of the air grille.

Therefore, an objective of the present invention is to provide a cooling system for a vehicle, which enables to reduce drag without adding weight to the front face of the vehicle and by relying on a simple arrangement of the front body of the vehicle.

The subject of the invention is therefore a vehicle assembly according to claim 1.

By providing a movable module arranged to allow the evacuation of air when cooling is not required, it is possible to reduce drag without adding any component to the front end of the vehicle, such as a motor for driving the blades of the air grille. Therefore, there is no addition of weight to the front end of the vehicle.

Furthermore, since the module can be mounted as a single unit, said module just need to rotate around a cross-car axis. Therefore, said module does not require a complex driving arrangement.

According to other features of the invention :
- the module comprises a frame and a plurality of fins, the frame extending transversally, the plurality of fins extending horizontally and transversally across said frame, the plurality of fins defining a plurality of openings;
- the module is a vehicle radiator and the fins are the radiator blades;
- the module comprises a fan;
- the module comprises a flap, and in that in the rest position, the flap closes the exhaust opening and in active position the flap is spaced from the exhaust opening;
- the assembly comprises a hood in which an outlet is formed, and in that the air guide connects the exhaust opening to the outlet ; and
- the assembly comprises at least one fender in which an outlet is formed, and in that the air guide connects the exhaust opening to the outlet.

The invention will be better understood on reading the following description, given as an example and made with reference to the appended drawings wherein:
- figure 1 is a perspective view of a front part of a vehicle body employing an assembly according to the present invention,
- figure 2 is a schematic sectional view through a front end of a vehicle with an assembly according to an embodiment, the assembly is in a rest position, and
- figure 3 is the same view as figure 2 with the assembly in an active position.

A front body of a vehicle schematically illustrated on the figures is designated by the general reference 2. Throughout this description, the term "height" is defined in relation to the road 1 on which a vehicle is intended to run and in a substantially vertical direction when the vehicle stands on the road 1. Furthermore, the term "longitudinal" is defined as being the direction along the vehicle, shown on the X axis, the term "transverse" as being defined according to width of the vehicle, and the term "horizontal" as defining a plan which is parallel to the road 1 on which a vehicle is intended to run.

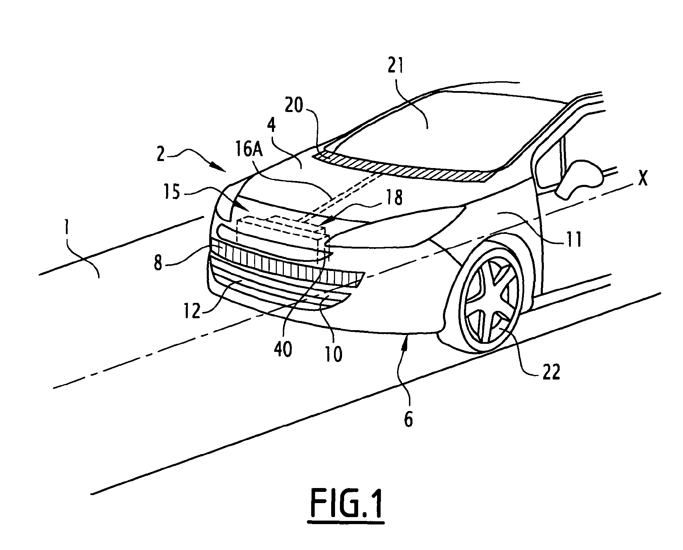

Referring to figure 1, the front body 2 of the vehicle of comprises a hood 4, covering an upper front portion of the vehicle body, a chassis 6, a bumper 8 and front grilles 10, covering a front face of the vehicle body. It also comprises fenders 11, each forming a front portion of both sides of the vehicle body. The grilles 10 form an air inlet 12, which enables the airflow to enter along the axis X into the vehicle 2. For example, the grilles comprise a plurality of substantially horizontal blades which extend transversely through the vehicle. With an emphasis on aesthetics, the plurality of blades can be distributed above and below the bumper, as shown on the figures. An engine compartment 14 is formed by the front fenders 11, the hood 4, the chassis 6, the grilles 10 and the bumper 8. The front body of the vehicle 2 comprises also a cooling system 15 placed in front of the non-illustrated engine of the vehicle 2 and which enables to cool the engine.

The cooling system 15 comprises two air guides 16A and 16B extending transversely under the hood 4 and over the chassis 6, respectively. The cooling system 15 also comprises a cooling module 18 and an exhaust opening 19. The upper air guide 16A connects the exhaust opening 19 to an outlet 20, for example, located at the bottom of a windshield 21. Alternatively, the exhaust opening 19 can be located in another part of the front body, for example, in the fenders 11 over the wheels 22 of the vehicle.

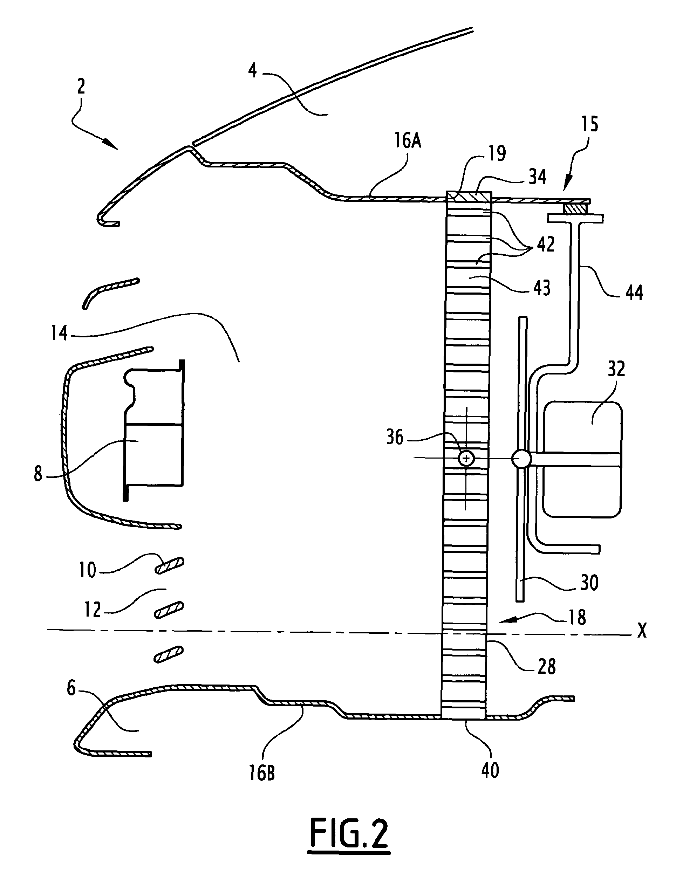

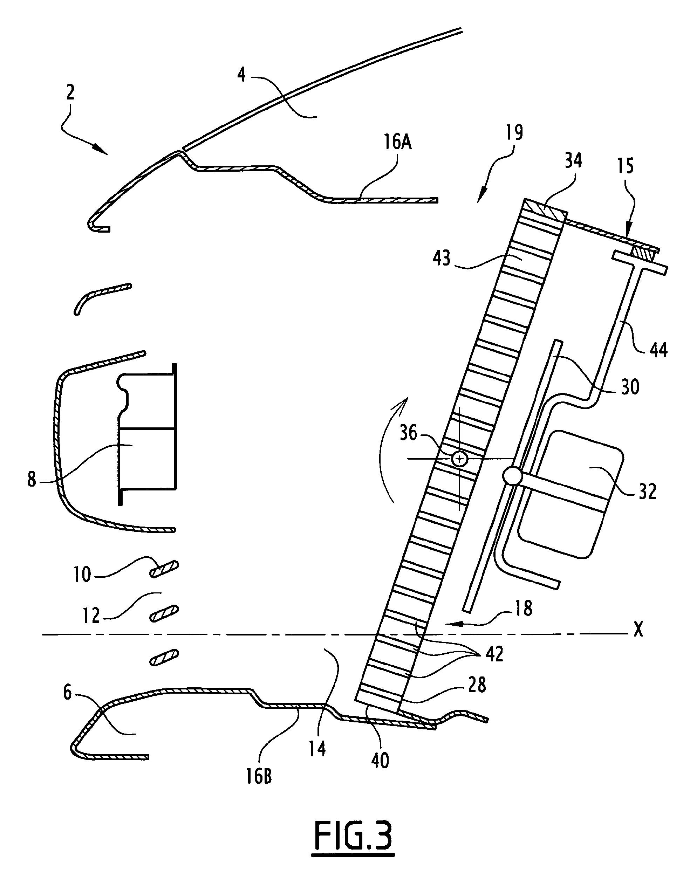

The cooling module 18 comprises a radiator 28, an electric fan 30, a motor 32 and a flap 34. The cooling module 18 is mounted opposite the grilles 10, by a supporting structure 36. For example, the supporting structure 36 is attached to the chassis 6 of the vehicle 2 by a transverse end. The height of the axis of the supportive structure is set according to the position of the air outlet 20. Similarly, the axis can be more or less forward along the vehicle, according to the position of the air outlet. The cooling module 18 is moveable in rotation around the axis of the supporting structure 36 between a rest position shown on figure 2 and an active position shown on figure 3. The supporting structure 36 is for example a motorized beam extending substantially transversely through the front end.

The radiator 28 comprises a frame 40 which is substantially rectangular, and in the rest position, it extends transversely through the vehicle and vertically between the air guides 16A and 16B. The radiator 28 is defined by a front side and a rear side which are connected horizontally by a plurality of fins 42. The plurality of fines 42 defines a plurality of openings 43 which is intended to let the airflow pass through the radiator 28, when the cooling system 18 is in the rest position. In the rest position, the fins 42 extend substantially along the X axis. In the active position, the fins 42 are at an oblique angle to the X axis, for example, the angle is substantially comprised between 30° and 60°, as shown in figure 3.

The electric fan 30 and its motor 32 are mounted at the rear side of the radiator 28 with an upper supporting structure 44. Therefore, the cooling module 18 can be mounted as a single unit enable to move in rotation.

The flap 34 is mounted on the upper supporting structure 44 and is moveable in order to close the exhaust opening 19 when the cooling module is in the rest position, and is spaced from the exhaust opening 19 when the cooling module 18 is in the active position.

The functioning of the invention will be described now.

When the vehicle is in motion, its internal combustion engine becomes hot and requires to be cooled by the cooling module 18. The cooling module 18 is then in the rest position. The fresh air enters into the engine compartment 14 through the air inlet 12, the airflow is along the X axis.

Then, the airflow along the X axis passes through the radiator 28 so as to cool a coolant included inside. If the airflow is not strong enough or if the vehicle is not in motion, the fan 30 starts to draw in air from the exterior of the vehicle. By thermal exchanges, the coolant cools the engine.

When the engine is cooled enough, the cooling module 18 rotates around the supporting structure 36 to be in active position so that the airflow along the X axis cannot pass through the radiator 28. In the active position, since the fins 42 are at an oblique angle to the X axis, the airflow along the X axis is deflected by the fins 42 and sent to the exhaust opening 19. Then, via the upper air guide 16A, the airflow goes to the outlet 20. Several exhaust openings could be implemented in order to further improve the air circulation and evacuation. The particular arrangement of the front face is cited as an example, and another known arrangement could be implemented.

In other embodiments, the air outlet 20 is formed in the hood or in at least one fender. Moreover, in the above discussed embodiment, the supporting structure 36 is a motorized beam; the principle concept of the present invention is not limited to this embodiment and may be modified such that the whole cooling module 18 is able to move in rotation between the rest position and the active position. In particular, this rotation is carried out around a cross-car axis whose position is based on the position of the air outlet.

Thus, the invention allows to reduce weight in the front face of the vehicle, indeed, said front body can be formed by simple grilles without needing any motorization mean. Besides, the invention allows a reduction of the drag when the engine is cool since the rotation of the cooling module enables the evacuation of the air.

Furthermore, the module can be mounted as a single unit which suits to high-speed production line. The fact that the module can be mounted as a single unit allows also to facilitate its driving in rotation without requiring a complex driving arrangement.

Moreover, the invention improves the low speed crash performance because the cooling module is able to rotate and so, to absorb more energy in case of front impact.

## Claims

1. A front-end automotive vehicle assembly (15) comprising a module (18) and an exhaust opening (19) and an outlet (20) connected to the exhaust opening (19),
wherein the module extends opposite an air inlet (12) of the vehicle and comprises at least one opening (43),
the module comprising a plurality of fins (42) and the module (18), being moveable in rotation around a substantially transverse axis between a rest position in which the opening allows longitudinal airflow to pass through the module along an X axis, and an active position **characterized in that** in the active position, the module allows the longitudinal airflow to exit the assembly via exhaust opening (19), the fins (42) are at an oblique angle to the X axis and the module deflects the longitudinal airflow toward exhaust opening (19) such that the longitudinal airflow goes to the outlet 20, the assembly comprising one air guide connecting the exhaust opening (19) to the exterior of the vehicle via the outlet.

2. An assembly (15) according to claim 1, **characterized in that** the module comprises a frame (40) and a plurality of fins (42), the frame extending transversally, the plurality of fins extending horizontally and transversally across said frame, the plurality of fins defining a plurality of openings (43).

3. An assembly (15) according to claim 2, **characterized in that** the module is a vehicle radiator (28) and the fins are the radiator blades.

4. An assembly according to claim 3, **characterized in that** the module comprises a fan (30).

5. An assembly (15) according to any of the claim 1 to 4, **characterized in that** the module (18) comprises a flap (34), and **in that** in the rest position, the flap closes the exhaust opening (19) and in active position the flap is spaced from the exhaust opening.

6. An assembly (15) according to claim 1, **characterized in that** the assembly comprises a hood (4) in which the outlet (20) is formed, and **in that** the air guide (16A) connects the exhaust opening (19) to the outlet (20).

7. An assembly (15) according to claim 1, **characterized in that** the assembly comprises at least one fender (11) in which the outlet is formed, and **in that** the air guide connects the exhaust opening to the outlet.

## Patentansprüche

1. Fahrzeugfrontanordnung (15), ein Modul (18) und eine Abluftöffnung (19) und einen mit der Abluftöffnung (19) verbundenen Auslass (20) umfassend,
wobei das Modul sich gegenüber einem Lufteinlass (12) des Fahrzeugs erstreckt und mindestens eine Öffnung (43) umfasst,
wobei das Modul eine Vielzahl von Rippen (42) umfasst und das Modul (18) zur Drehung um eine im Wesentlichen querliegende Achse zwischen einer Ruheposition, in der die Öffnung einem Längsluftstrom gestattet, durch das Modul entlang einer X-Achse hindurchzugehen und einer aktiven Position beweglich ist,
**dadurch gekennzeichnet, dass** in der aktiven Position das Modul dem Längsluftstrom gestattet, die Anordnung über die Abluftöffnung (19) zu verlassen, die Rippen (42) in einem schrägen Winkel zu der X-Achse liegen und das Modul den Längsluftstrom zu der Abluftöffnung (19) derart ablenkt, dass der Längsluftstrom zu dem Auslass (20) geführt wird, wobei die Anordnung eine Luftführung umfasst, die die Abluftöffnung (19) über den Auslass in Bezug auf das Fahrzeug nach außen verbindet.

2. Anordnung (15) nach Anspruch 1, **dadurch gekennzeichnet, dass** das Modul einen Rahmen (40) und eine Mehrzahl von Rippen (42) umfasst, wobei der Rahmen sich quer erstreckt, die Mehrzahl von Rippen sich horizontal und quer durch diesen Rahmen erstreckt, die Mehrzahl von Rippen eine Mehrzahl von Öffnungen (43) begrenzt.

3. Anordnung (15) nach Anspruch 2, **dadurch gekennzeichnet, dass** das Modul ein Fahrzeugkühler (28) ist und die Rippen die Kühlblätter sind.

4. Anordnung (15) nach Anspruch 3, **dadurch gekennzeichnet, dass** das Modul einen Ventilator (30) umfasst.

5. Anordnung (15) nach einem der Ansprüche 1 bis 4, **dadurch gekennzeichnet, dass** das Modul (18) eine Klappe (34) umfasst, und dass in der Ruheposition die Klappe die Abluftöffnung (19) abschließt und in der aktiven Position die Klappe von der Abluftöffnung entfernt ist.

6. Anordnung (15) nach Anspruch 1, **dadurch gekennzeichnet, dass** die Anordnung eine Haube (4) umfasst, in der der Auslass (20) ausgebildet ist, und dass die Luftführung (16A) die Abluftöffnung (19) zu dem Auslass (20) verbindet.

7. Anordnung (15) nach Anspruch 1, **dadurch gekennzeichnet, dass** die Anordnung mindestens einen Kotflügel (11) umfasst, in dem der Auslass ausgebildet ist, und dass die Luftführung die Abluftöffnung mit dem Auslass verbindet.

## Revendications

1. Ensemble de véhicule automobile d'extrémité avant (15) comprenant un module (18) et une ouverture d'échappement (19) et une sortie (20) raccordée à l'ouverture d'échappement (19),
dans lequel le module s'étend à l'opposé d'une entrée d'air (12) du véhicule et comprend au moins une ouverture (43),
le module comprenant une pluralité d'ailettes (42) et le module (18) étant mobile en rotation autour d'un axe sensiblement transversal entre une position de repos dans laquelle l'ouverture permet le passage de l'écoulement d'air longitudinal à travers le module le long d'un axe X, et une position active, **caractérisé en ce que** dans la position active, le module permet la sortie de l'écoulement d'air longitudinal de l'ensemble via l'ouverture d'échappement (19), les ailettes (42) sont à un angle oblique par rapport à l'axe X et le module dévie l'écoulement d'air longitudinal vers l'ouverture d'échappement (19) de sorte que l'écoulement d'air longitudinal va vers la sortie (20), l'ensemble comprenant un guide d'air raccordant l'ouverture d'échappement (19) à l'extérieur du véhicule, via la sortie.

2. Ensemble (15) selon la revendication 1, **caractérisé en ce que** le module comprend un bâti (40) et une pluralité d'ailettes (42), le bâti s'étendant de manière transversale, la pluralité d'ailettes s'étendant horizontalement et transversalement sur ledit châssis, la pluralité d'ailettes définissant une pluralité d'ouvertures (43).

3. Ensemble (15) selon la revendication 2, **caractérisé en ce que** le module est un radiateur de véhicule (28) et les ailettes sont les pales du radiateur.

4. Ensemble selon la revendication 3, **caractérisé en ce que** le module comprend un ventilateur (30).

5. Ensemble (15) selon l'une quelconque des revendications 1 à 4, **caractérisé en ce que** le module (18) comprend un volet (34), et **en ce que**, dans la position de repos, le volet ferme l'ouverture d'échappement (19) et dans la position active le volet est espacé de l'ouverture d'échappement.

6. Ensemble (15) selon la revendication 1, **caractérisé en ce que** l'ensemble comprend un capot (4) dans lequel la sortie (20) est formée, et **en ce que** le guide d'air (16A) raccorde l'ouverture d'échappement (19) à la sortie (20).

7. Ensemble (15) selon la revendication 1, **caractérisé en ce que** l'ensemble comprend au moins une aile (11) dans laquelle la sortie est formée, et **en ce que** le guide d'air raccorde l'ouverture d'échappement à la sortie.
